# FASCICULE DE BREVET EUROPEEN

(11) **EP 3 034 834 B1**
(45) Date de publication et mention de la délivrance du brevet: **10.04.2019**
(21) Numéro de dépôt: 14307051.4
(22) Date de dépôt: 16.12.2014
(51) Int. Cl.: F02C 6/12, F02C 6/14, F02C 6/20, B60K 6/28

(54) **Procédé de gestion d'une demande de puissance pour le fonctionnement d'un aéronef sans pilote équipé d'un moteur à combustion interne**
Steuerungsverfahren einer Leistungsanforderung zum Betrieb eines unbemannten Luftfahrzeugs, das mit einem Verbrennungsmotor ausgestattet ist
Method for managing power demand for the operation of an unmanned aircraft provided with an internal combustion engine

(43) Date de publication de la demande: 22.06.2016
(73) Titulaire: AIRBUS (SAS), 31700 Blagnac (FR)
(72) Inventeur: Smaoui, Hichem, 75014 PARIS (FR); Rechain, Bruno, 75015 PARIS (FR); Retho, Fabien, 31390 CARBONNE (FR)
(74) Mandataire: Gicquel, Olivier Yves Gérard

(56) Documents cités:
- EP-A1- 2 778 048
- DE-A1-102008 014 404
- FR-A1- 2 986 566
- JP-A- 2006 335 185
- US-A1- 2007 164 167

## Description

### ARRIERE-PLAN DE L'INVENTION

### Domaine de l'invention

La présente invention concerne un procédé de gestion d'une demande de puissance pour le fonctionnement d'un aéronef sans pilote de type à voilure tournante, équipé d'un moteur à combustion interne.

Elle concerne encore un aéronef sans pilote à voilure tournante muni d'un turbomoteur pour la mise en oeuvre de ce procédé de gestion.

### Arrière-plan technologique

On connaît des appareils munis d'une voilure tournante comprenant une unique unité motrice pour assurer l'entrainement d'au moins un rotor de la voilure.

Une telle unité motrice est alors dimensionnée pour fournir la puissance nécessaire à l'appareil afin d'assurer sa propulsion et/ou sa sustentation.

Il est parfois nécessaire que cette unité motrice soit un moteur à combustion interne du type moteur DIESEL pour des applications où certains carburants tels que de l'essence, ne peuvent être mis en oeuvre.

Or, l'offre moteur DIESEL pour le marché aéronautique est très restreinte, ce qui implique parfois d'avionner des moteurs automobiles - à grande fiabilité - mais dont la puissance n'est pas toujours adaptée à l'aéronef et/ou la densité de puissance est généralement limitée.

De plus, sur un drone à décollage vertical, la demande de puissance est souvent maximale sur les phases de décollage et les phases stationnaires, phases qui, sur de nombreuses missions, ont une durée relativement courtes.

Il est donc souvent nécessaire de « booster » la puissance initiale du moteur pour parvenir à des performances installées acceptables.

L'ajout d'un turbocompresseur au moteur existant est une solution généralement utilisée pour parvenir à un apport de puissance supplémentaire sur l'arbre moteur.

Ce turbocompresseur permet d'assurer une suralimentation en air en entrée des pistons augmentant ainsi sensiblement la puissance développée par le moteur.

La modification des lois d'injections est également un moyen d'accroître la puissance du moteur.

Dans ces deux cas, Il faut s'assurer que les paramètres limites du moteur (température en entrée de la turbine du turbocompresseur, pression de la culasse) ne soient pas impactés par ces modifications ou que ces dernières autorisent une durée de vie du moteur minimale.

Une telle solution peut également demander de plus lourdes modifications sur le refroidissement moteur, les joints d'étanchéité, ...

Quoiqu'il en soit, on observe que ces solutions peuvent s'avérer insuffisantes pour assurer un fonctionnement optimal de l'appareil à voilure tournante, la puissance maximale développée par un moteur DIESEL étant variable et dépendante de l'altitude de cet appareil et des conditions de température.

Ces variations de puissance maximale disponible sont suffisamment importantes pour devoir être considérées et définir une stratégie dynamique.

On connait, par ailleurs, la mise en oeuvre sur certains aéronefs d'unité motrice auxiliaire thermique, connue sous l'acronyme APU (« auxiliaire power unit).

De telles unités motrices auxiliaires sont généralement utilisées pour alimenter des circuits auxiliaires tels qu'hydraulique ou pneumatique, et ne servent jamais à entraîner une boîte de transmission de puissance d'au moins un rotor sur un aéronef à voilure tournante.

D'autre part, lorsque l'unique unité motrice de l'appareil à voilure tournante tombe en panne, cet appareil étant dépourvu d'éléments de sécurité redondants pour prendre la relève sans interruption de service, cet appareil s'écrase de manière non contrôlée.

Il existe donc un besoin important pour garantir qu'un appareil à voilure tournante en opération puisse atterrir de manière sécurisé en cas de défaillance de son unité motrice.

Le document FR2986566 divulgue un groupe moteur combiné dans un aéronef léger selon l'art antérieur.

La présente invention vise à pallier les divers inconvénients ci-dessus exposés en proposant un procédé de gestion d'un appel de puissance pour assurer le fonctionnement d'un appareil à voilure tournante de type drone, particulièrement simple dans sa conception et dans son mode opératoire, fiable et économique, et capable de prendre en compte de manière dynamique les variations dans la puissance maximale fournie par le moteur principal de cet appareil.

Un autre objet de la présente invention est un tel procédé assurant une récupération de l'appareil en cas de défaillance de son unité motrice principale, l'appareil étant dépourvu de redondance.

Encore un objet de l'invention est un aéronef à voilure tournante tel qu'un drone à décollage vertical (VTOL), dont l'agencement original de sa chaîne de propulsion autorise la mise en oeuvre de ce procédé de gestion d'une demande de puissance.

### BREVE DESCRIPTION DE L'INVENTION

A cet effet, l'invention concerne un procédé de gestion d'une demande de puissance pour le fonctionnement d'un aéronef sans pilote de type à voilure tournante, selon la revendication 1, ledit aéronef comportant un moteur à combustion interne fournissant une puissance principale maximale P_{M} susceptible de varier.

Selon l'invention, on réalise les étapes suivantes, en l'absence de panne dudit moteur à combustion interne :
a) collecter au moins une partie des gaz d'échappement lorsque ce moteur à combustion interne fonctionne,
b) alimenter une turbine avec l'énergie des gaz ainsi collectés,
c) produire un courant électrique à partir d'un générateur électrique relié à ladite turbine, et
d) comparer la puissance principale maximale P_{M} fournie par ledit moteur à combustion interne lors de la demande de puissance avec la puissance P_{D} demandée,
e) lorsque la puissance principale maximale P_{M} est au moins égale à la puissance P_{D} demandée, stocker au moins une partie de cette énergie électrique ainsi générée dans au moins une unité de stockage d'énergie et/ou utiliser au moins une partie de cette énergie électrique ainsi générée pour assister le moteur à combustion interne, en fournissant une puissance auxiliaire P_{A} complétant une puissance principale Pₜ développée par le moteur à combustion interne, avec Pₜ inférieur à P_{M}, de sorte que P_{A} + Pₜ = P_{D}, ou
f) lorsque la puissance principale maximale P_{M} est inférieure à la puissance P_{D} demandée pour le fonctionnement dudit aéronef, utiliser au moins une partie de cette énergie électrique ainsi générée pour assister le moteur à combustion interne de manière à fournir la puissance P_{D} demandée, ou utiliser au moins une partie de l'énergie électrique stockée dans ladite au moins une unité de stockage d'énergie pour assister le moteur à combustion interne de manière à fournir la puissance P_{D} demandée, ou
g) lorsque la puissance P_{D} demandée est supérieure à la somme de la puissance principale maximale P_{M} développée par le moteur à combustion interne et de la puissance auxiliaire pouvant être fournie par ladite au moins une unité de stockage, ajuster le fonctionnement dudit aéronef de manière à être en mesure de fournir ladite puissance P_{D} demandée selon l'une des étapes e) et f).

Ce procédé de gestion offre ainsi une méthode globale de gestion de la puissance demandée pour le fonctionnement d'un aéronef sans pilote notamment un drone à voilure tournante.

Ce procédé de gestion d'une demande de puissance est particulièrement avantageux dans l'hypothèse où l'on souhaite augmenter la puissance installée d'un drone à décollage vertical. L'ajout de la masse liée à la mise en oeuvre de nouveaux équipements/systèmes est compensé par un gain d'efficacité globale au niveau de la chaîne de propulsion et une possibilité de récupération du drone en cas d'avarie moteur.

L'augmentation de la puissance installée permet soit de transporter plus de fuel afin d'augmenter l'autonomie du drone, soit de transporter plus de charge utile, de manière plus sécurisée.

De manière avantageuse, le moteur à combustion interne étant un moteur à pistons, la turbine mise en oeuvre à l'étape b) est une turbine additionnelle ne faisant pas partie du, ou encore non reliée au, moteur à combustion interne. Cette turbine additionnelle est avantageusement placée en aval de la turbine du turbocompresseur.

Ladite au moins une unité de stockage d'énergie est choisie dans le groupe comprenant une batterie électrique, un supercondensateur, ...

Dans différents modes de réalisation particuliers de ce procédé de gestion, chacun ayant ses avantages particuliers et susceptibles de nombreuses combinaisons techniques possibles:
- à l'étape e), utilisant au moins une partie de l'énergie électrique stockée dans ladite au moins une unité de stockage d'énergie pour assister ledit moteur à combustion interne, on alimente un compresseur additionnel dudit moteur à combustion interne et/ou on alimente un moteur électrique développant une puissance auxiliaire P_{A}.

Ainsi, avec l'énergie électrique stockée dans ladite au moins une unité de stockage d'énergie, on peut alimenter un deuxième compresseur permettant d'augmenter la pression cylindre dans le moteur à combustion interne pour obtenir un apport de puissance supplémentaire P_{A} sur l'arbre moteur, et/ou alimenter un moteur électrique connecté à la boîte de transmission principale de l'aéronef sans pilote (adjonction d'un couple moteur).
- ledit aéronef étant un aéronef à voilure tournante, réguler l'énergie électrique stockée de sorte qu'elle soit toujours au moins égale à une énergie de récupération de l'aéronef en cas de panne dudit moteur à combustion interne.

Cette gestion de l'énergie de récupération peut donc imposer le choix d'une des actions possibles décrites aux étapes e) et f),
- préalablement aux étapes e) et f), déterminer l'état de charge SOC de chaque unité de stockage d'énergie.

Bien entendu, l'aéronef sans pilote peut comporter une ou plusieurs unités de stockage, par exemple une ou plusieurs batteries électriques.

Lorsque l'aéronef sans pilote comporte plusieurs unités de stockage d'énergie électrique, la capacité de stockage de cet ensemble de stockage d'énergie est alors égale à la somme des capacités de stockage individuelles de, ou propres à, chaque unité de stockage.

Rappelons que l'état de charge (SOC - « State of Charge ») d'une batterie représente la quantité d'électricité (exprimée en Ah) stockée dans ladite batterie normalisée par la quantité maximale, ou capacité nominale, qui peut être stockée après une charge complète de cette batterie.

De préférence, cet aéronef étant un aéronef à voilure tournante comportant N unités de stockage d'énergie électrique, avec N > 1, on autorise la capacité d'une première unité de stockage à être inférieure ou égale à une valeur seuil Vs/N où Vs correspond à une énergie de récupération de l'aéronef en cas de panne dudit moteur à combustion interne, à l'étape f), lorsque la somme des capacités restantes dans les (N-1) autres unités de stockage est supérieure ou égale à Vs.

Bien entendu, lorsqu'une étape e) se présente, on cherchera à recharger en priorité cette unité de stockage dont la capacité est inférieure à ladite valeur seuil Vs/N de manière à ramener cette capacité à une valeur supérieure ou égale à Vs/N.
- ledit aéronef sans pilote étant un aéronef à voilure tournante comprenant au moins deux rotors, lorsque ledit moteur à combustion interne est en panne, désengager le couplage mécanique desdits rotors pour assurer une libre rotation de ces rotors et une autorotation de l'aéronef.

De préférence, cet aéronef sans pilote est configuré pour désengager automatiquement le couplage mécanique de chaque rotor en cas d'arrêt dudit moteur à combustion interne.

Ce couplage mécanique peut être un embrayage à griffes ou à friction.

De préférence, on contrôle la descente en autorotation de l'aéronef et son atterrissage lors d'une panne du moteur à combustion interne en utilisant au moins une partie de l'énergie électrique stockée dans ladite au moins une unité de stockage pour fournir audit aéronef la puissance demandée pour réaliser ce contrôle.
- ledit aéronef étant au sol, utiliser au moins une partie de l'énergie électrique stockée dans ladite au moins une unité de stockage pour fournir audit aéronef la puissance demandée, le moteur à combustion interne étant à l'arrêt,
- à l'étape e), le stockage d'au moins une partie de l'énergie électrique ainsi générée dans au moins une unité de stockage d'énergie est séquentiel ou non.

On peut ainsi charger une unité de stockage à la fois ou simultanément l'ensemble de ces unités de stockage lorsque leur capacité respective n'est pas déjà à leur valeur nominale (état de charge SOC à 100%).
- à l'étape g), on réalise au moins une des actions suivantes : baisser l'altitude de l'aéronef, modifier la vitesse de l'aéronef.

De manière avantageuse, cet aéronef comporte des moyens de détermination d'altitude permettant d'évaluer l'altitude à laquelle évolue cet aéronef. On peut ainsi fixer une altitude seuil As donnée en dessous de laquelle l'aéronef ne peut descendre en raison par exemple de la présence d'obstacles connus (mur, habitation, ...) ou supposés (aéronef évoluant au dessus d'un terrain dont le relief naturel (arbre, ...) est difficilement prévisible). La prise en compte de cette altitude seuil As a alors une incidence sur l'étape g). La diminution de l'altitude pourra s'accompagner d'une autre action pour diminuer la puissance P_{M} demandée telle qu'une modification de la vitesse, lorsqu'une diminution de la seule altitude de l'aéronef amènerait l'aéronef à une altitude estimée inférieure à cette altitude seuil.

Ces moyens de détermination de l'altitude de l'aéronef sans pilote comportent au moins un capteur barométrique permettant de mesurer les variations de pression au cours du vol, variations qui sont corrélées aux variations d'altitude.

La présente invention concerne encore un aéronef sans pilote à voilure tournante selon la revendication 11, configuré pour la mise en oeuvre du procédé de gestion d'une demande de puissance tel que décrit précédemment, ledit aéronef comportant un moteur à combustion interne suralimenté pour mettre en mouvement ladite voilure tournante, ledit moteur à combustion interne comportant un premier compresseur et fournissant une puissance principale maximale pour assurer au moins l'entrainement de ladite voilure tournante, ladite puissance principale maximale étant susceptible de varier.

Selon l'invention, cet aéronef comprend :
- un ensemble de récupération d'énergie thermique et de transformation de cette énergie thermique en énergie électrique, cet ensemble comprenant un moyen pour collecter au moins une partie des gaz d'échappement lorsque le moteur à combustion interne fonctionne et alimenter une turbine avec lesdits gaz d'échappement ainsi collectés pour transformer l'énergie de ces gaz ainsi collectés en énergie mécanique, un générateur électrique alimenté par cette turbine pour produire une énergie électrique,
- au moins une unité de stockage d'énergie électrique configurée pour stocker au moins une partie de l'énergie électrique ainsi produite,
- un système de contrôle de la propulsion permettant de déterminer la puissance principale maximale fournie par ledit moteur à combustion interne lors d'une demande de puissance et de gérer en fonction de la puissance demandée pour au moins entraîner ladite voilure tournante, et de la puissance maximale fournie par ledit moteur à combustion interne, l'énergie électrique ainsi générée pour répondre à la demande de puissance.

Ce moteur à combustion interne suralimenté développant une puissance principale maximale P_{M} est relié à une boîte de transmission principale pour mettre en rotation celle-ci de manière à entraîner en rotation au moins un rotor de la voilure tournante.

Ce moteur à combustion interne est de préférence un moteur diesel.

De préférence, ledit moteur à combustion interne comporte un deuxième compresseur configuré pour être alimenté en énergie électrique par ladite ou au moins une desdites unités de stockage en énergie électrique. Ce deuxième compresseur est donc un compresseur électrique.

En supplément ou de manière alternative, cet aéronef comporte un moteur électrique configuré pour être alimenté en énergie électrique par ladite ou au moins une desdites unités de stockage en énergie électrique, ledit moteur électrique étant connecté à la boîte de transmission principale auquel est relié ledit moteur à combustion interne.

Ces éléments permettent notamment d'apporter une puissance supplémentaire pour assister le moteur à combustion interne.

Avantageusement, cet aéronef à voilure tournante comprenant au moins deux rotors, il comprend un moyen pour désengager le couplage mécanique desdits rotors de manière à assurer une libre rotation de ces rotors lorsque ledit moteur à combustion interne est en panne.

De préférence, cet aéronef comporte un système de gestion de l'état de charge de chaque unité de stockage en énergie électrique pour disposer en continu d'une énergie de récupération de l'aéronef en cas de panne dudit moteur à combustion interne.

### BREVE DESCRIPTION DES DESSINS

D'autres avantages, buts et caractéristiques particulières de la présente invention ressortiront de la description qui va suivre faite, dans un but explicatif et nullement limitatif, en regard des dessins annexés, dans lesquels :
- la figure 1 est une vue schématique de l'arbre de décisions mis en oeuvre par un logiciel dans l'unité de contrôle de la propulsion (PCU) pour gérer une demande de puissance pour assurer le fonctionnement d'un drone VTOL, selon un mode de réalisation particulier de la présente invention ;
- la figure 2 est une vue très schématique d'un premier mode de réalisation d'un système de génération de puissance hybride pour un drone VTOL conforme à l'invention ;
- la figure 3 est une vue très schématique d'un deuxième mode de réalisation d'un système de génération de puissance hybride pour un drone VTOL conforme à l'invention ;
- la figure 4 est une vue très schématique d'un troisième mode de réalisation d'un système de génération de puissance hybride pour un drone VTOL conforme à l'invention ;

### DESCRIPTION DETAILLEE DE MODES DE REALISATION DE

### L'INVENTION

On notera tout d'abord que les figures ne sont pas à l'échelle.

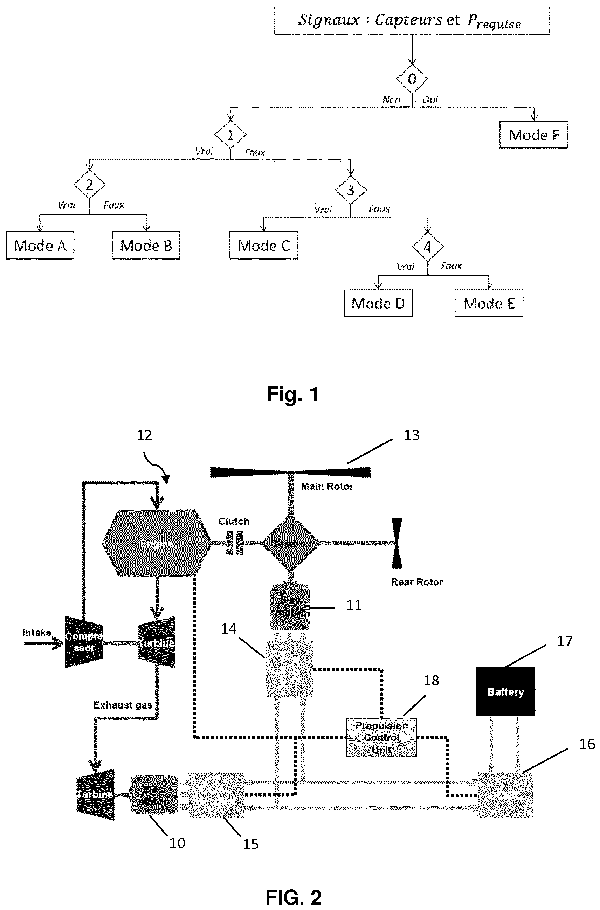

La figure 1 est une vue schématique de l'arbre de décisions mis en oeuvre par un logiciel adéquat dans l'unité de contrôle de la propulsion (PCU) pour gérer une demande de puissance pour assurer le fonctionnement d'un drone VTOL, selon un mode de réalisation particulier de la présente invention.

Ce drone comporte une unité de stockage d'énergie dont l'alimentation en énergie électrique et la restitution sur l'arbre moteur de cette énergie électrique sont gérées par l'unité de contrôle de la propulsion (PCU).

Cette stratégie pour assurer la gestion d'un appel de puissance est ici décrite sous la forme d'un arbre de décision composé de cinq (5) tests et de six (6) modes de fonctionnement.

Un premier test (TEST 0) évalue, au moyen de différents capteurs placés sur le moteur à combustion interne, l'état de fonctionnement de ce dernier. Si ces capteurs adressent des signaux indiquant une défaillance de celui-ci, un mode de sécurité (MODE F) est enclenché pour assurer un apport de puissance électrique directement issue de l'unité de stockage d'énergie en vue de permettre une mise en autorotation assistée et un atterrissage en douceur du drone.

Le second test (TEST 1) vérifie si le moteur à combustion interne est en mesure de fournir une puissance maximale au moins égale à la puissance demandée pour satisfaire la demande :
- Si oui, le moteur à combustion interne peut, suivant un test (TEST 2) sur l'état de charge de l'unité de stockage en énergie :
   - être assisté par un ensemble de récupération d'énergie thermique et de transformation de cette énergie thermique en énergie électrique, et ainsi fonctionner sous la demande de puissance pour réduire sa consommation (MODE A, SOC égale à la limite maximale), ou
   - fournir l'intégralité de la puissance demandée. La puissance récupérée par l'ensemble de récupération d'énergie thermique et de transformation de cette énergie thermique en énergie électrique au niveau des gaz d'échappement est alors utilisée pour recharger l'unité de stockage d'énergie (MODE B, SOC inférieur à la limite maximale).
- Si la puissance maximale développée par le moteur au moment de la demande de puissance, est inférieure à la puissance demandée, alors :
   - si la puissance totale combinée du moteur thermique à pleine charge et de l'énergie électrique issue de la récupération de l'énergie thermique au niveau des gaz d'échappement est suffisante (TEST 3), le moteur thermique est complété par cette puissance électrique générée par l'ensemble de récupération d'énergie thermique et de transformation de cette énergie thermique en énergie électrique (MODE C),
   - si l'état de charge (SOC) de l'unité de stockage d'énergie est supérieur à une valeur seuil correspondant à une énergie de récupération du drone en cas de panne du moteur et si la puissance totale combinée du moteur thermique à pleine charge et celle délivrée par l'unité de stockage d'énergie est suffisante (TEST 4), le moteur thermique est complété par la puissance électrique délivré par l'unité de stockage d'énergie (MODE D),
   - si le TEST 4 échoue, le drone passe en mode de sécurité visant à réduire la demande en puissance par une modification de mission. Cette modification implique des manoeuvres (baisse de l'altitude, modification des vitesses,...) réduisant la demande de puissance (MODE E).

Ce mode est provisoire et n'impose pas un atterrissage d'urgence.

Ce moteur à combustion interne étant un moteur à pistons, cet ensemble de récupération d'énergie thermique et de transformation de cette énergie thermique en énergie électrique comprend ici
- un moyen pour collecter au moins une partie des gaz d'échappement lorsque le moteur à combustion interne fonctionne et alimenter directement une turbine avec lesdits gaz d'échappement ainsi collectés pour transformer l'énergie résiduelle de ces gaz ainsi collectés en énergie mécanique, et
- un générateur électrique alimenté par cette turbine pour produire une énergie électrique.

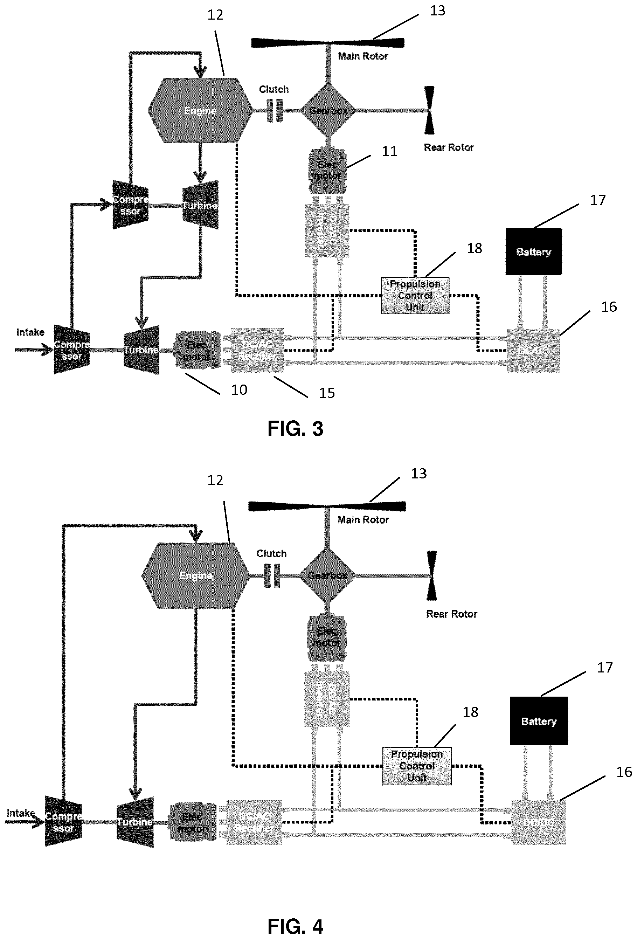

Comme représenté sur les Figures 2 à 4, la chaine électrique du système de génération de puissance hybride du drone est ici composée :
- d'un moteur/alternateur électrique 10 fonctionnant à haut régime (vitesse de rotation d'un turbo),
- d'un moteur/alternateur électrique 11 relié à la transmission mécanique entre le bloc moteur 12 et le rotor 13 principal,
- de deux convertisseurs AC/DC 14, 15,
- d'un convertisseur DC/DC 16,
- d'une unité 17 de stockage d'énergie comprenant plusieurs batteries ou supercapacités pour le stockage d'énergie électrique et son électronique de gestion permettant de surveiller l'état de charge et de santé de cette unité de stockage d'énergie électrique,
- d'une unité 18 de contrôle de la propulsion PCU (Propulsion Control Unit) permettant de gérer les flux d'énergie électrique en fonction de la demande de puissance et de l'état de charge de la batterie.

Le moteur/alternateur électrique 10 fonctionnant à haut régime (vitesse de rotation d'un turbo) est capable de fournir ou de récupérer la puissance mécanique sur l'arbre du turbocompresseur du moteur 12 Diesel.

Le moteur/alternateur électrique 11 connecté à la transmission mécanique entre le bloc 12 moteur et le rotor 13 principal permet de fournir de la puissance mécanique aux rotors du drone VTOL.

Les deux convertisseurs AC/DC 14, 15 permettent de convertir la puissance électrique portée par du courant continu en puissance électrique portée par du courant alternatif et vice-versa.

Le convertisseur DC/DC 16 permet de réguler le courant alimentant l'unité de stockage d'énergie durant la charge.

L'unité 17 de stockage d'énergie permet de stocker ou de restituer la puissance électrique vers/depuis les moteurs/alternateurs électriques.

## Revendications

1. Procédé de gestion d'une demande de puissance P_{D} pour assurer le fonctionnement d'un aéronef sans pilote, mis en oeuvre par un logiciel adéquat dans une unité de contrôle de la propulsion (PCU) de l'aéronef, ledit aéronef comportant un moteur (12) à combustion interne fournissant une puissance principale maximale P_{M} susceptible de varier, **caractérisé en ce qu'**on réalise les étapes suivantes, en l'absence de panne dudit moteur (12) à combustion interne :
a) collecter au moins une partie des gaz d'échappement lorsque ce moteur (12) à combustion interne fonctionne,
b) alimenter une turbine avec l'énergie des gaz ainsi collectés,
c) produire un courant électrique à partir d'un générateur électrique relié à ladite turbine, et
d) comparer la puissance principale maximale P_{M} fournie par ledit moteur (12) à combustion interne lors de la demande de puissance avec la puissance P_{D} demandée,
e) lorsque la puissance principale maximale P_{M} est au moins égale à la puissance P_{D} demandée, stocker au moins une partie de cette énergie électrique ainsi générée dans au moins une unité (17) de stockage d'énergie et/ou utiliser au moins une partie de cette énergie électrique ainsi générée pour assister le moteur (12) à combustion interne, en fournissant une puissance auxiliaire P_{A} complétant une puissance principale Pₜ développée par le moteur (12) à combustion interne, avec Pₜ inférieur à P_{M}, de sorte que P_{A} + Pₜ = P_{D}, ou
f) lorsque la puissance principale maximale P_{M} est inférieure à la puissance P_{D} demandée pour le fonctionnement dudit aéronef, utiliser au moins une partie de cette énergie électrique ainsi générée pour assister le moteur (12) à combustion interne de manière à fournir la puissance P_{D} demandée, ou utiliser au moins une partie de l'énergie électrique stockée dans ladite au moins une unité (17) de stockage d'énergie pour assister le moteur (12) à combustion interne de manière à fournir la puissance P_{D} demandée, ou
g) lorsque la puissance P_{D} demandée est supérieure à la somme de la puissance principale maximale P_{M} développée par le moteur (12) à combustion interne et de la puissance auxiliaire pouvant être fournie par ladite au moins une unité de stockage, ajuster le fonctionnement dudit aéronef de manière à être en mesure de fournir ladite puissance P_{D} demandée selon l'une des étapes e) et f).

2. Procédé selon la revendication 1, **caractérisé en ce qu'**à l'étape e), utilisant au moins une partie de l'énergie électrique stockée dans ladite au moins une unité (17) de stockage d'énergie pour assister ledit moteur (12) à combustion interne, on alimente un compresseur additionnel dudit moteur (12) à combustion interne et/ou on alimente un moteur électrique développant une puissance auxiliaire P_{A}.

3. Procédé selon la revendication 1 ou 2, **caractérisé en ce que** ledit aéronef étant un aéronef à voilure tournante (13), réguler l'énergie électrique stockée de sorte qu'elle soit toujours au moins égale à une énergie de récupération de l'aéronef en cas de panne dudit moteur (12) à combustion interne, ladite énergie de récupération permettant le contrôle de la descente en autorotation de l'aéronef et son atterrissage.

4. Procédé selon l'une quelconque des revendications 1 à 3, **caractérisé en ce que** préalablement aux étapes e) et f), déterminer l'état de charge SOC de chaque unité (17) de stockage d'énergie.

5. Procédé selon la revendication 3 ou 4, **caractérisé en ce que** ledit aéronef étant un aéronef à voilure tournante (13) comportant N unités de stockage d'énergie électrique, avec N > 1, autoriser la capacité d'une première unité de stockage à être inférieure ou égale à une valeur seuil Vs/N où Vs correspond à une énergie de récupération de l'aéronef en cas de panne dudit moteur (12) à combustion interne, à l'étape f), lorsque la somme des capacités restantes dans les (N-1) autres unités de stockage est supérieure ou égale à Vs.

6. Procédé selon l'une quelconque des revendications 1 à 5, **caractérisé en ce que** ledit aéronef sans pilote étant un aéronef à voilure tournante comprenant au moins deux rotors (13), lorsque ledit moteur (12) à combustion interne est en panne, désengager le couplage mécanique desdits rotors (13) pour assurer une libre rotation de ces rotors et une autorotation de l'aéronef.

7. Procédé selon la revendication 6, **caractérisé en ce que** ledit aéronef sans pilote est configuré pour désengager automatiquement le couplage mécanique de chaque rotor (13) en cas d'arrêt dudit moteur (12) à combustion interne.

8. Procédé selon la revendication 6 ou 7, **caractérisé en ce que** contrôlant la descente en autorotation de l'aéronef et son atterrissage lors d'une panne du moteur (12) à combustion interne, utiliser au moins une partie de l'énergie électrique stockée dans ladite au moins une unité de stockage pour fournir audit aéronef la puissance demandée nécessaire pour réaliser ce contrôle.

9. Procédé selon l'une quelconque des revendications 1 à 8, **caractérisé en ce que** ledit aéronef étant au sol, utiliser au moins une partie de l'énergie électrique stockée dans ladite au moins une unité (17) de stockage pour fournir audit aéronef la puissance demandée, le moteur (12) à combustion interne étant à l'arrêt.

10. Procédé selon l'une quelconque des revendications 1 à 9, **caractérisé en ce qu'**à l'étape g), on réalise au moins une des actions suivantes : baisser l'altitude de l'aéronef, modifier la vitesse de l'aéronef.

11. Aéronef sans pilote à voilure tournante configuré pour la mise en oeuvre, par un logiciel adéquat dans une unité de contrôle de la propulsion (PCU) de l'aéronef, du procédé de gestion d'une demande de puissance selon l'une quelconque des revendications 1 à 10, ledit aéronef comportant un moteur (12) à combustion interne suralimenté pour mettre en mouvement ladite voilure tournante (13), ledit moteur (12) à combustion interne comportant un premier compresseur et fournissant une puissance principale maximale pour assurer au moins l'entrainement de ladite voilure tournante, ladite puissance principale maximale étant susceptible de varier, **caractérisé en ce qu'**il comprend :
- un ensemble de récupération d'énergie thermique et de transformation de cette énergie thermique en énergie électrique, cet ensemble comprenant un moyen pour collecter au moins une partie des gaz d'échappement lorsque le moteur (12) à combustion interne fonctionne et alimenter une turbine avec lesdits gaz d'échappement ainsi collectés pour transformer l'énergie de ces gaz ainsi collectés en énergie mécanique, un générateur électrique alimenté par cette turbine pour produire une énergie électrique,
- au moins une unité (17) de stockage d'énergie configurée pour stocker au moins une partie de l'énergie électrique ainsi produite,
- une unité (18) de contrôle de la propulsion permettant de déterminer la puissance principale maximale fournie par ledit moteur (12) à combustion interne lors d'une demande de puissance et de gérer en fonction de la puissance demandée pour au moins entraîner ladite voilure tournante, et de la puissance maximale fournie par ledit moteur (12) à combustion interne, l'énergie électrique ainsi générée pour répondre à la demande de puissance.

12. Aéronef selon la revendication 11, **caractérisé en ce que** ledit moteur (12) à combustion interne comporte un deuxième compresseur configuré pour être alimenté en énergie électrique par ladite ou au moins une desdites unités de stockage en énergie électrique.

13. Aéronef selon la revendication 11, **caractérisé en ce qu'**il comporte un moteur électrique configuré pour être alimenté en énergie électrique par ladite ou au moins une desdites unités de stockage en énergie électrique, ledit moteur électrique étant connecté à la boîte de transmission principale auquel est relié ledit moteur (12) à combustion interne.

14. Aéronef selon l'une quelconque des revendications 11 à 13, **caractérisé en ce que** ledit aéronef à voilure tournante comprenant au moins deux rotors, il comprend un moyen pour désengager le couplage mécanique desdits rotors de manière à assurer une libre rotation de ces rotors lorsque ledit moteur (12) à combustion interne est en panne.

15. Aéronef selon l'une quelconque des revendications 11 à 14, **caractérisé en ce qu'**il comporte un système de gestion de l'état de charge de chaque unité de stockage en énergie électrique pour disposer en continu d'une énergie de récupération de l'aéronef en cas de panne dudit moteur (12) à combustion interne, ladite énergie de récupération permettant le contrôle de la descente en autorotation de l'aéronef et son atterrissage.

## Patentansprüche

1. Verfahren zum Management einer Leistungsanforderung P_{D} zum Sicherstellen des Betriebs eines unbemannten Luftfahrzeugs, das von einer geeigneten Software in einer Antriebssteuereinheit (PCU) des Luftfahrzeugs durchgeführt wird, wobei das Luftfahrzeug einen Verbrennungsmotor (12) aufweist, der eine maximale Grundleistung P_{M} liefert, die variieren kann, **dadurch gekennzeichnet, dass** die folgenden Schritte ausgeführt werden, wenn kein Ausfall des Verbrennungsmotors (12) vorliegt:
a) Sammeln wenigstens eines Teils der Abgase, wenn dieser Verbrennungsmotor (12) arbeitet,
b) Speisen einer Turbine mit der Energie der so gesammelten Gase,
c) Erzeugen eines elektrischen Stroms durch einen Stromgenerator, der mit der Turbine verbunden ist, und
d) Vergleichen der maximalen Grundleistung P_{M}, die von dem Verbrennungsmotor (12) bei der Leistungsanforderung geliefert wird, mit der angeforderten Leistung P_{D},
e) wenn die maximale Grundleistung P_{M} wenigstens gleich der angeforderten Leistung P_{D} ist, Speichern wenigstens eines Teils dieser so erzeugten elektrischen Energie in wenigstens einer Energiespeichereinheit (17) und/oder Verwenden wenigstens eines Teils dieser so erzeugten elektrischen Energie, um den Verbrennungsmotor (12) zu unterstützen, indem eine Hilfsleistung P_{A} geliefert wird, die eine von dem Verbrennungsmotor (12) entwickelte Grundleistung Pₜ ergänzt, wobei Pₜ kleiner als P_{M} ist, derart, dass P_{A} + Pₜ = P_{D} ist, oder
f) wenn die maximale Grundleistung P_{M} kleiner als die für den Betrieb des Luftfahrzeugs angeforderte Leistung P_{D} ist, Verwenden wenigstens eines Teils dieser so erzeugten elektrischen Energie, um den Verbrennungsmotor (12) zu unterstützen, so dass die angeforderte Leistung P_{D} geliefert wird, oder Verwenden wenigstens eines Teils der in der wenigstens einen Energiespeichereinheit (17) gespeicherten elektrischen Energie, um den Verbrennungsmotor (12) zu unterstützen, so dass die angeforderte Leistung P_{D} geliefert wird, oder
g) wenn die angeforderte Leistung P_{D} größer ist als die Summe der von dem Verbrennungsmotor (12) entwickelten maximalen Grundleistung P_{M} und der Hilfsleistung, die von der wenigstens einen Speichereinheit geliefert werden kann, Anpassen des Betriebs des Luftfahrzeugs, derart, dass es möglich ist, die angeforderte Leistung P_{D} gemäß einem der Schritte e) und f) zu liefern.

2. Verfahren nach Anspruch 1, **dadurch gekennzeichnet, dass** in Schritt e), wenn wenigstens ein Teil der in der wenigstens einen Energiespeichereinheit (17) gespeicherten elektrischen Energie verwendet wird, um den Verbrennungsmotor (12) zu unterstützen, ein zusätzlicher Kompressor des Verbrennungsmotors (12) gespeist wird und/oder ein Elektromotor gespeist wird, der eine Hilfsleistung P_{A} entwickelt.

3. Verfahren nach Anspruch 1 oder 2, **dadurch gekennzeichnet, dass**, wenn das Luftfahrzeug ein Drehflügelluftfahrzeug (13) ist, die gespeicherte elektrische Energie derart geregelt wird, dass sie stets wenigstens gleich einer Bergungsenergie des Luftfahrzeugs im Falle eines Ausfalls des Verbrennungsmotors (12) ist, wobei diese Bergungsenergie die Steuerung des Sinkflugs mit Autorotation des Luftfahrzeugs und seiner Landung ermöglicht.

4. Verfahren nach einem der Ansprüche 1 bis 3, **dadurch gekennzeichnet, dass** vor den Schritten e) und f) der Ladezustand SOC jeder Energiespeichereinheit (17) bestimmt wird.

5. Verfahren nach Anspruch 3 oder 4, **dadurch gekennzeichnet, dass**, wenn das Luftfahrzeug ein Drehflügelluftfahrzeug (13) ist, das N Energiespeichereinheiten aufweist, mit N > 1, in Schritt f) zugelassen wird, dass die Kapazität einer ersten Speichereinheit kleiner oder gleich einem Schwellenwert Vs/N ist, wobei Vs einer Bergungsenergie des Luftfahrzeugs im Falle eines Ausfalls des Verbrennungsmotors (12) entspricht, wenn die Summe der restlichen Kapazitäten in den (N-1) anderen Speichereinheiten größer oder gleich Vs ist.

6. Verfahren nach einem der Ansprüche 1 bis 5, **dadurch gekennzeichnet, dass**, wenn das unbemannte Luftfahrzeug ein Drehflügelluftfahrzeug ist, das wenigstens zwei Rotoren (13) umfasst, wenn der Verbrennungsmotor (12) ausgefallen ist, die mechanische Kopplung der Rotoren (13) gelöst wird, um eine freie Rotation dieser Rotoren und eine Autorotation des Luftfahrzeugs sicherzustellen.

7. Verfahren nach Anspruch 6, **dadurch gekennzeichnet, dass** das unbemannte Luftfahrzeug dafür ausgelegt ist, im Falle eines Stillstands des Verbrennungsmotors (12) automatisch die mechanische Kopplung jedes Rotors (13) zu lösen.

8. Verfahren nach Anspruch 6 oder 7, **dadurch gekennzeichnet, dass**, wenn bei einem Ausfall des Verbrennungsmotors (12) der Sinkflug mit Autorotation des Luftfahrzeugs und seine Landung gesteuert werden, wenigstens ein Teil der in der wenigstens einen Speichereinheit gespeicherten elektrischen Energie verwendet wird, um dem Luftfahrzeug die angeforderte Leistung zu liefern, die erforderlich ist, um diese Steuerung durchzuführen.

9. Verfahren nach einem der Ansprüche 1 bis 8, **dadurch gekennzeichnet, dass**, wenn sich das Luftfahrzeug am Boden befindet, wenigstens ein Teil der in der wenigstens einen Speichereinheit (17) gespeicherten elektrischen Energie verwendet wird, um dem Luftfahrzeug die angeforderte Leistung zu liefern, wobei der Verbrennungsmotor (12) stillsteht.

10. Verfahren nach einem der Ansprüche 1 bis 9, **dadurch gekennzeichnet, dass** in Schritt g) wenigstens eine der folgenden Aktionen ausgeführt wird: Verringern der Höhe des Luftfahrzeugs, Ändern der Geschwindigkeit des Luftfahrzeugs.

11. Unbemanntes Drehflügelluftfahrzeug, welches für die Durchführung, durch eine geeignete Software in einer Antriebssteuereinheit (PCU) des Luftfahrzeugs, des Verfahrens zum Management einer Leistungsanforderung nach einem der Ansprüche 1 bis 10 ausgelegt ist, wobei das Luftfahrzeug einen Verbrennungsmotor (12) mit Aufladung umfasst, um den Drehflügel (13) in Bewegung zu setzen, wobei der Verbrennungsmotor (12) einen ersten Kompressor aufweist und eine maximale Grundleistung liefert, um wenigstens den Antrieb des Drehflügels sicherzustellen, wobei die maximale Grundleistung variieren kann, **dadurch gekennzeichnet, dass** es umfasst:
- eine Anordnung zur Rückgewinnung von Wärmeenergie und zur Umwandlung dieser Wärmeenergie in elektrische Energie, wobei diese Anordnung ein Mittel zum Sammeln wenigstens eines Teils der Abgase, wenn der Verbrennungsmotor (12) arbeitet, und Speisen einer Turbine mit den so gesammelten Abgasen, um die Energie dieser so gesammelten Gase in mechanische Energie umzuwandeln, und einen von dieser Turbine gespeisten Stromgenerator zum Erzeugen einer elektrischen Energie umfasst,
- wenigstens eine Energiespeichereinheit (17), die dafür ausgelegt ist, wenigstens einen Teil der so erzeugten elektrischen Energie zu speichern,
- eine Einheit (18) zur Steuerung des Antriebs, die es ermöglicht, die maximale Grundleistung zu bestimmen, die von dem Verbrennungsmotor (12) bei einer Leistungsanforderung geliefert wird, und in Abhängigkeit von der benötigten Leistung, um wenigstens den Drehflügel anzutreiben, und von der maximalen Leistung, die von dem Verbrennungsmotor (12) geliefert wird, die so erzeugte elektrische Energie zu managen, um die Leistungsanforderung zu erfüllen.

12. Luftfahrzeug nach Anspruch 11, **dadurch gekennzeichnet, dass** der Verbrennungsmotor (12) einen zweiten Kompressor aufweist, der dafür ausgelegt ist, von der oder wenigstens einer der Speichereinheiten für elektrische Energie mit elektrischer Energie gespeist zu werden.

13. Luftfahrzeug nach Anspruch 11, **dadurch gekennzeichnet, dass** es einen Elektromotor aufweist, der dafür ausgelegt ist, von der oder wenigstens einer der Speichereinheiten für elektrische Energie mit elektrischer Energie gespeist zu werden, wobei der Elektromotor mit dem Hauptgetriebe verbunden ist, mit welchem der Verbrennungsmotor (12) verbunden ist.

14. Luftfahrzeug nach einem der Ansprüche 11 bis 13, **dadurch gekennzeichnet, dass**, wenn das Drehflügelluftfahrzeug wenigstens zwei Rotoren umfasst, es ein Mittel zum Lösen der mechanischen Kopplung der Rotoren umfasst, um eine freie Rotation dieser Rotoren sicherzustellen, wenn der Verbrennungsmotor (12) ausgefallen ist.

15. Luftfahrzeug nach einem der Ansprüche 11 bis 14, **dadurch gekennzeichnet, dass** es ein System zum Management des Ladezustands jeder Speichereinheit für elektrische Energie aufweist, um kontinuierlich über eine Energie zur Bergung des Luftfahrzeugs im Falle eines Ausfalls des Verbrennungsmotors (12) zu verfügen, wobei diese Bergungsenergie die Steuerung des Sinkflugs mit Autorotation des Luftfahrzeugs und seiner Landung ermöglicht.

## Claims

1. Method of managing a power demand P_{D} to assure the operation of a pilotless aircraft, implemented by appropriate software in a propulsion control unit (PCU) of the aircraft, said aircraft including an internal combustion engine (12) supplying a maximum principal power P_{M} liable to vary, **characterized in that**, in the absence of failure of said internal combustion engine (12), the following steps are carried out:
a) collecting at least some of the exhaust gases when this internal combustion engine (12) is operating,
b) feeding a turbine with the energy of the gases collected in this way,
c) producing an electrical current by means of an electrical generator connected to said turbine, and
d) comparing the maximum principal power P_{M} supplied by said internal combustion engine (12) at the time of the power demand with the demanded power P_{D},
e) if the maximum principal power P_{M} is at least equal to the demanded power P_{D}, storing at least some of the electrical energy generated in this way in at least one energy storage unit (17) and/or using at least some of the electrical energy generated in this way to assist the internal combustion engine (12) by supplying an auxiliary power P_{A} complementing a main power Pₜ developed by the internal combustion engine (12), with Pₜ less than P_{M}, so that P_{A} + Pₜ = P_{D}, or
f) if the maximum principal power P_{M} is less than the power P_{D} demanded for the operation of said aircraft, using at least some of the electrical energy generated in this way to assist the internal combustion engine (12) to provide the demanded power P_{D} or using at least some of the electrical energy stored in said at least one energy storage unit (17) to assist the internal combustion engine (12) to supply the demanded power P_{D}, or
g) if the demanded power P_{D} is greater than the sum of the maximum principal power P_{M} developed by the internal combustion engine (12) and the auxiliary power that can be supplied by said at least one storage unit, modifying the operation of said aircraft so as to be able to supply said demanded power P_{D} in accordance with one of the steps e) or f).

2. Method according to Claim 1, **characterized in that** in the step e), using at least some of the electrical energy stored in said at least one energy storage unit (17) to assist said internal combustion engine (12), an additional compressor of said internal combustion engine (12) is fed and/or an electric motor developing an auxiliary power P_{A} is fed.

3. Method according to Claim 1 or 2, **characterized in that**, said aircraft being a rotary wing aircraft (13), it regulates the stored electrical energy so that it is always at least equal to a recovery energy of the aircraft in the event of failure of said internal combustion engine (12), said recovery energy making it possible to control the descent in autorotation of the aircraft and its landing.

4. Method according to any one of Claims 1 to 3, **characterized in that**, before the steps e) and f), it determines the state of charge SOC of each energy storage unit (17).

5. Method according to Claim 3 or 4, **characterized in that**, said aircraft being a rotary wing aircraft (13) including N electrical energy storage units, with N > 1, it authorizes the capacity of a first storage unit to be less than or equal to a threshold value Vs/N where Vs corresponds to a recovery energy of the aircraft in the event of failure of said internal combustion engine (12), in the step f), if the sum of the remaining capacities in the (N-1) other storage units is greater than or equal to Vs.

6. Method according to any one of Claims 1 to 5, **characterized in that**, said pilotless aircraft being a rotary wing aircraft including at least two rotors (13), if said internal combustion engine (12) has failed, it disengages the mechanical coupling of said rotors (13) to assure free rotation of these rotors and autorotation of the aircraft.

7. Method according to Claim 6, **characterized in that** said pilotless aircraft is configured to disengage automatically the mechanical coupling of each rotor (13) in the event of said internal combustion engine (12) stopping.

8. Method according to Claim 6 or 7, **characterized in that**, to control the descent in autorotation of the aircraft and its landing in the event of failure of the internal combustion engine (12), it uses at least some of the electrical energy stored in said at least one storage unit to supply to said aircraft the power demanded to effect this control.

9. Method according to any one of Claims 1 to 8, **characterized in that**, said aircraft being on the ground, it uses at least some of the electrical energy stored in said at least one storage unit (17) to supply to said aircraft the power demanded, the internal combustion engine (12) being stopped.

10. Method according to any one of Claims 1 to 9, **characterized in that** in the step g) at least one of the following actions is carried out: reducing the altitude of the aircraft, modifying the speed of the aircraft.

11. Rotary wing pilotless aircraft configured for implementing, by appropriate software in a propulsion control unit (PCU) of the aircraft, the method according to any one of Claims 1 to 10 of managing a power demand, said aircraft including a supercharged internal combustion engine (12) to drive said rotary wing system (13), said internal combustion engine (12) including a first compressor and supplying a maximum principal power to assure at least the driving of said rotary wing system, said maximum principal power being liable to vary, **characterized in that** it comprises:
- a system for recovery of thermal energy and conversion of that thermal energy into electrical energy, this system including means for collecting at least some of the exhaust gases when the internal combustion engine (12) is operating and feeding a turbine with said exhaust gases collected in this way to convert the energy of these gases collected in this way into mechanical energy, an electrical generator fed by this turbine to produce electrical energy,
- at least one energy storage unit (17) configured to store at least some of the electrical energy produced in this way,
- a propulsion control unit (18) making it possible to determine the maximum principal power supplied by said internal combustion engine (12) at the time of a power demand and to manage the electrical energy generated in this way to meet the power demand as a function of the power demanded to at least drive said rotary wing, and of the maximum power supplied by said internal combustion engine (12).

12. Aircraft according to Claim 11, **characterized in that** said internal combustion engine (12) includes a second compressor configured to be fed with electrical energy by said electrical energy storage unit or at least one of said electrical energy storage units.

13. Aircraft according to Claim 11, **characterized in that** it includes an electric motor configured to be fed with electrical energy by said electrical energy storage unit or at least one of said electrical energy storage units, said electric motor being connected to the main gearbox to which said internal combustion engine (12) is connected.

14. Aircraft according to any one of Claims 11 to 13, **characterized in that** said rotary wing aircraft including at least two rotors, it includes means for disengaging the mechanical coupling of said rotors so as to assure free rotation of these rotors if said internal combustion engine (12) has failed.

15. Aircraft according to any one of Claims 11 to 14, **characterized in that** it includes a system for managing the state of charge of each electrical energy storage unit to have available at all times a recovery energy of the aircraft in the event of failure of said internal combustion engine (12), said recovery energy making it possible to control the descent in autorotation of the aircraft and its landing.
